# EUROPÄISCHE PATENTSCHRIFT

(11) **EP 1 428 731 B1**
(45) Veröffentlichungstag und Bekanntmachung des Hinweises auf die Patenterteilung: **05.04.2006**
(21) Anmeldenummer: 03027451.8
(22) Anmeldetag: 01.12.2003
(51) Int. Cl.: B60R 21/20

(54) **Kontrollsystem für Rastverbindungen einer Airbagvorrichtung**
Control system for a snap lock connection of an airbag
Système de control pour la fixation par encliquetage d'un airbag

(30) Priorität: 10.12.2002 DE 20219124 U
(43) Veröffentlichungstag der Anmeldung: 16.06.2004
(73) Patentinhaber: TRW Automotive Safety Systems GmbH, 63743 Aschaffenburg (DE)
(72) Erfinder: Schütz, Dominik, 63857 Waldaschaff (DE); Scherer, Ralf, 63739 Aschaffenburg (DE)
(74) Vertreter: Kitzhofer, Thomas

(56) Entgegenhaltungen:
- EP-A- 0 563 943
- US-A- 4 974 873
- US-A- 5 165 717
- US-A- 5 257 816
- US-A1- 2002 171 229

## Beschreibung

Die Erfindung betrifft ein Kontrollsystem zur Erkennung einer nicht korrekt verriegelten Rastverbindung zwischen einem Gassackmodul und einem fahrzeugfesten Bauteil.

Die elektrische Kontaktierung des Gassackmoduls ist aus verständlichen Gründen sicherheitsrelevant. Es wird z.B. beim Einbau des Gassackmoduls in das Fahrzeug überprüft, ob der elektrische Kontakt korrekt hergestellt ist, wie in der US-A-2002/0171229 oder der US-A-5 257 816. Besteht kein elektrischer Kontakt, so daß des Gassack bei einem Unfall nicht ausgelöst werden könnte, wird ein Warnsignal ausgegeben.

Ebenso kann sichergestellt werden, daß eine Aktivierung des Gassackmoduls nur im eingebauten Zustand möglich ist. In der EP-A- 563 943 sind hierzu zerstörbare Kontakte vorgesehen, die beim Einbau des Moduls eine Überbrückung eines Widerstands aufheben. Bei der in der US-A- 4 974 873 vorgestellten Lösung wird beim Ausbau des Gassackmoduls ein Stromkreis unterbrochen, so daß sich außerhalb des Fahrzeugs das Gassackmodul nicht aktivieren läßt.

Es ist auch möglich, wie in der US-A-5 165 717 gezeigt, den Beschleunigungssensor, der das Aktivierungssignal für das Gassackmodul liefert, zu blockieren, z.B. während Wartungsarbeiten. In diesem Falle ist ein Warnsignal aktiviert, solange die Unterbrechung besteht.

US 5 165 717 beschreibt ein Kontrollsystem
wobei ein Signalstromkreis vorgesehen ist, mit einem ersten und einem zweiten Kontaktelement die Teil eines im Signalstromkreis angeordneten Schalters sind, wobei ein Kontrollsignal erzeugt wird, wenn der Schalter geschlossen ist.

Bei der Montage von Gassackmodulen werden zur Beschleunigung des Montagevorgangs immer häufiger Rastverbindungen eingesetzt, um das Gassackmodul z.B. am Lenkrad zu befestigen. Hierbei ist es essentiell, daß nicht korrekt verriegelte Rastverbindungen sicher erkannt und behoben werden können. Das Feststellen einer nicht korrekt verriegelten Rastverbindung ist optisch oft schwer möglich, da die beiden miteinander in Eingriff zu bringenden Rastelemente sich bereits in unmittelbarer Nähe zueinander befinden.

Die Erfindung schafft eine Kontrollmöglichkeit für derartige Rastverbindungen, die sowohl während der Montage des Gassackmoduls als auch während der weiteren Lebensdauer des Gassackmoduls einsetzbar ist.

Dies wird bei einem oben genannten System durch die Merkmale des Anspruchs 1 erreicht.

Mit anderen Worten ist das Kontrollsystem so ausgelegt, daß die Kontaktelemente nur dann in Berührung kommen, wenn das Gassackmodul nicht in der korrekten Stellung in seine am Fahrzeug angeordnete Aufnahme eingesetzt ist. Dies kann z.B. geschehen, wenn die beiden Rastelemente sich gegeneinander verkanten. Sobald die Rastverbindung korrekt geschlossen ist, sind die beiden Kontaktelemente voneinander getrennt, genauso wie sie es vor dem Einsetzen des Gassackmoduls in die Aufnahme sind. Auch an optisch nicht einsehbaren Stellen läßt sich durch dieses Kontrollsystem sicher feststellen, wenn die Rastverbindung nicht korrekt verriegelt ist. Das Kontrollsystem kann auch bei einem Ausbau des Gassackmoduls zu Wartungszwecken oder einem Austausch des Gassackmoduls eingesetzt werden, ohne daß am Fahrzeug zusätzliche Bauelemente montiert oder entfernt werden müßten.

Bevorzugt ist das Kontrollsignal ein akustisches Signal, wobei vorteilhaft der Signalstromkreis Teil eines Hupenstromkreises ist, so daß das Hupsignal als akustisches Signal eingesetzt werden kann.

In einer bevorzugten Ausführungsform der Erfindung ist das erste Rastelement ein am fahrzeugfesten Bauteil oder dem Gassackmodul befestigtes Metallteil, das teilweise von einer elektrischen Isolierung umgeben ist. Durch die Isolierung läßt sich das Bauteil leicht auf einem von Null verschiedenen Potential halten, wobei nur die nicht isolierte Stelle oder Stellen zur Erzeugung eines elektrischen Kontaktes herangezogen werden.

Das zweite Rastelement ist in dieser Ausführungsform durch wenigstens einen am Gassackmodul oder am fahrzeugfesten Bauteil befestigten Rasthaken gebildet. Die beiden Rastelemente greifen zur Bildung der Rastverbindung auf bekannte Weise ineinander, wobei die Rasthaken des zweiten Rastelements das erste Rastelement um einen geringen Weg elastisch auslenken können, um die Rastverbindung zu bilden.

In dieser Ausführungsform ist das erste Kontaktelement durch das erste Rastelement gebildet. Es ist jedoch auch möglich, für das erste Kontaktelement ein vom ersten Rastelement verschiedenes Bauteil vorzusehen, z.B. ein am Gassackmodul oder am fahrzeugfesten Bauteil befestigtes Metallblech.

Das zweite Kontaktelement ist in dieser ersten Ausführungsform ein am Gassackmodul oder am fahrzeugfesten Bauteil befestigtes Metallblech.

Bevorzugt wird der Signalstromkreis von einer Batterie des Fahrzeugs gespeist.

In einer zweiten Ausführungsform der Erfindung sind die Merkmale des Anspruchs 10 vorgesehen. In diesem Fall wird die nicht korrekt verriegelte Rastverbindung nicht durch ein Signal, sondern durch das Ausbleiben eines Signals, z.B. bei Betätigung der Hupe, angezeigt. Das Signal läßt sich nur bei korrekt verriegelter Rastverbindung, d.h. bei korrekt mit dem Lenkrad oder einem anderen fahrzeugfesten Bauteil verbundenen Gassackmodul auslösen.

US 4 974 873 beschreibt ein Kontrollsystem
mit einem ersten und einem zweiten, zum ersten komplementären Rastelement
wobei ein Signalstromkreis der geschlossen ein den Airbag auslösendes Signal erzeugt, vorgesehen ist, mit einem ersten und einem zweiten Kontaktelement die Teil eines ersten, im Signalstromkreis angeordneten Schalters sind,
wobei der Signalstromkreis einen zweiten, in einem Grundzustand offenen Schalter umfaßt, der mit dem ersten Schalter in Serie geschaltet ist,
wobei nur in einem korrekt verriegelten Zustand der Rastelemente die Kontaktelemente in elektrischem Kontakt miteinander sind, so daß der erste Schalter geschlossen ist und der Signalstromkreis durch Schließen des zweiten Schalters geschlossen werden kann.

In dieser zweiten Ausführungsform der Erfindung ist der Signalstromkreis bevorzugt Teil eines Hupenstromkreises, und der zweite Schalter ist durch die Hupkontakte gebildet. Als Test für den korrekten Einbau des Gassackmoduls wird demnach die Hupe betätigt, ertönt ein Signal, ist das Gassackmodul korrekt montiert, ertönt kein Hupsignal, ist die Rastverbindung nicht korrekt verriegelt.

Alle anderen bereits zur ersten Ausführungsform beschriebenen Merkmale können auch in dieser zweiten Ausführungsform verwirklicht sein.

Weitere Merkmale und Vorteile der Erfindung ergeben sich aus der nachfolgenden Beschreibung zweier Ausführungsbeispiele in Verbindung mit den beigefügten Zeichnungen. In diesen zeigen:
- Figur 1 eine schematische Ansicht eines Lenkrads mit einem Gassackmodul und einem Kontrollsystem gemäß einer ersten Ausführungsform der Erfindung in einem nicht korrekt verriegelten Zustand;
- Figur 2 das System aus Figur 1 im korrekt verriegelten Zustand;
- Figur 3 eine Baugruppe aus einem Lenkrad und einem Gassackmodul mit einem erfindungsgemäßen Kontrollsystem gemäß einer zweiten Ausführungsform der Erfindung in einem nicht korrekt verriegelten Zustand;
- Figur 4 das System aus Figur 3 im korrekt verriegelten Zustand;
- Figur 5 eine schematische Ansicht des Signalstromkreises des Kontrollsystems gemäß der ersten Ausführungsform;
- Figur 6 eine schematische Ansicht des Signalstromkreises des Kontrollsystems gemäß der zweiten Ausführungsform; und
- Figur 7 eine schematische Draufsicht auf Bauteile eines erfindungsgemäßen Kontrollsystems.

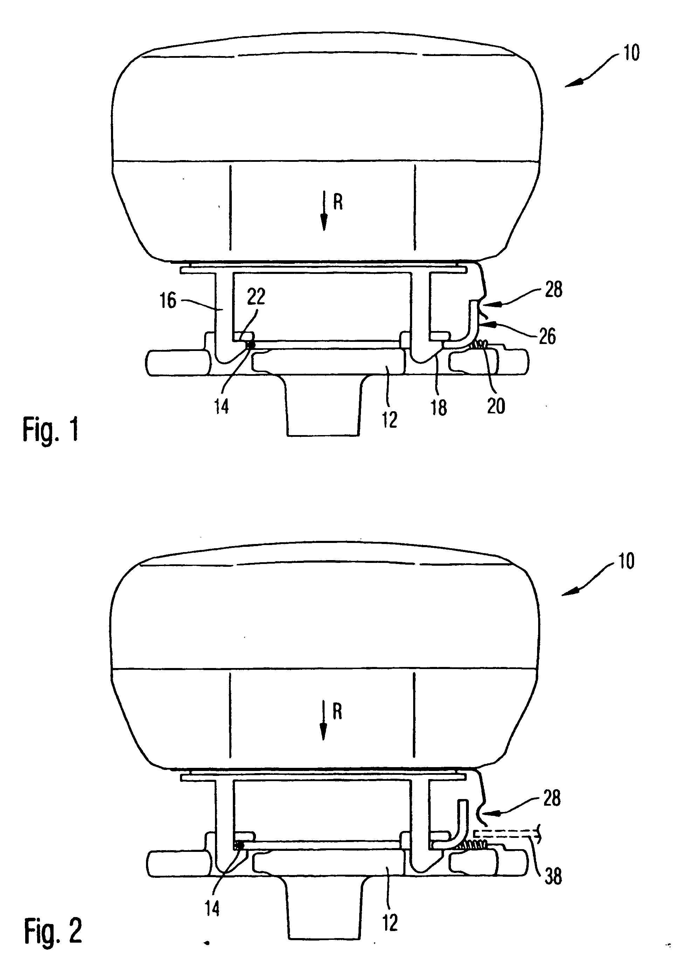

Die Figuren 1 und 2 zeigen eine Baugruppe aus einem Gassackmodul 10 und einem Lenkrad 12, welches beispielhaft für ein fahrzeugfestes Bauteil steht, wobei von dem Lenkrad 12 in den Figuren jeweils nur das Skelett des Nabenbereichs dargestellt ist, mit einem Kontrollsystem zur Erkennung einer nicht korrekt verriegelten Rastverbindung zwischen dem Gassackmodul und dem Lenkrad gemäß einer ersten Ausführungsform.

Die Rastverbindung wird zwischen einem ersten Rastelement 14, das in den hier gezeigten Ausführungsformen am Lenkrad 12 angeordnet ist, und mehreren zweiten Rastelementen 16, die hier fest mit dem Gassackmodul 10 verbunden sind, ausgebildet.

In den gezeigten Beispielen ist das erste Rastelement 14 ein starrer Metalldraht oder eine Metallplatte, während die zweiten Rastelemente 16 auf bekannter Weise ausgebildete Rasthaken sind.

Die Rastverbindung zwischen den Rastelementen 14, 16 wird durch das Einschieben des Gassackmoduls 10 in Einschubrichtung R ausgebildet. Dabei drücken die Rasthaken mit an der Unterseite der Haken ausgebildeten schrägen Gleitflächen 18 das senkrecht zur Einschubrichtung R gegen ein Federelement 20 verschieblich gelagerte erste Rastelement 14 zur Seite, so daß Rastflächen 22 der Rasthaken in Einschubrichtung R sich am ersten Rastelement 14 vorbeibewegen können. Nachdem die Rastflächen 22 das erste Rastelement 14 passiert haben, wird dieses durch die Federkraft des Federelements 20 zurückgestellt, so daß die Rastflächen 22 in Anlage am ersten Rastelement 14 sind, wodurch das Gassackmodul 10 am Lenkrad 12 fixiert ist. Dieser gewünschte korrekt verriegelte Zustand ist in Figur 2 gezeigt.

Es kann nun vorkommen, daß trotz korrektem Überdrücken der Rastelemente 14, 16 gegeneinander z.B. durch Reibungswiderstände oder Fremdkörper die Rasthaken ihre Verriegelungsposition nicht erreichen, sondem, wie in Figur 1 gezeigt, in einem nicht korrekt verriegelten Zustand hängenbleiben. In dem in Figur 1 gezeigten Beispiel liegen die Gleitflächen 18 noch am ersten Rastelement 14 an, die Rastflächen 22 haben sich also nicht in Richtung R am ersten Rastelement 14 vorbeibewegt und das erste Rastelement 14 ist noch aus seiner Grundstellung ausgelenkt. Optisch sind die beiden Zustände nur schwer voneinander zu unterscheiden.

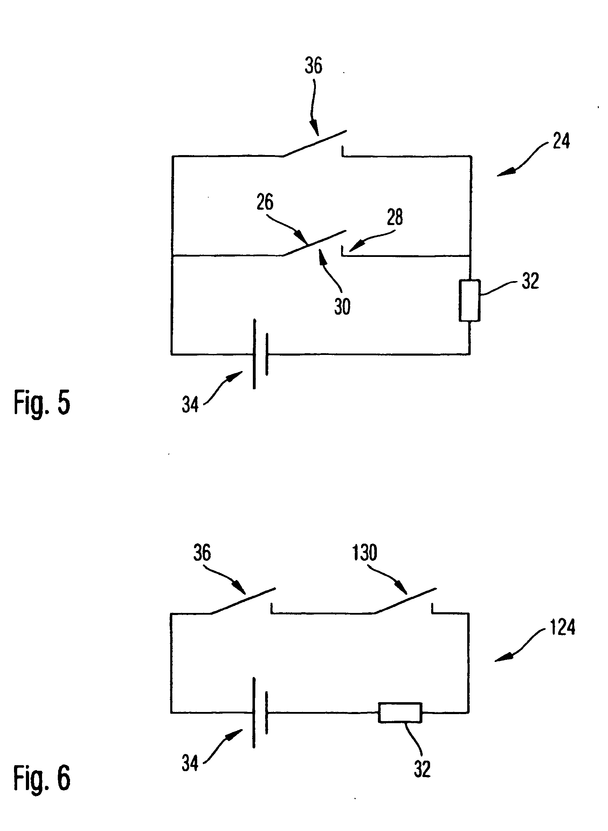

Zur Kontrolle der korrekten Verriegelung der Rastverbindung 14, 16 ist ein Signalstromkreis 24 vorgesehen (siehe Figur 5), zu dem ein erstes Kontaktelement 26 sowie ein zweites Kontaktelement 28 gehören, die beide Teil eines im Signalstromkreis 24 angeordneten Schalters 30 sind.

Hier ist das erste Kontaktelement 26 einstückig mit dem ersten Rastelement 14 in Form eines von diesem entgegen der Einschubrichtung R abstehenden metallenen Arms ausgebildet. Das zweite Kontaktelement 28 ist hier ein gebogenes Metallblech, das fest mit dem Gassackmodul 10 verbunden ist und das einen abgebogenen Arm aufweist. Die beiden Arme der Kontaktelemente 26, 28 sind so angeordnet, daß sie sich nur im nicht korrekt verriegelten Zustand der Rastverbindung 14, 16 berühren. Im korrekt verriegelten Zustand löst sich das erste Kontaktelement 26 durch die Bewegung des ersten Rastelements 14 in seine Grundstellung wieder vom zweiten Kontaktelement 28.

Der etektrische Kontakt zwischen den Kontaktelementen 26, 28 führt dazu, daß der Signalstromkreis 24 geschlossen wird, was wiederum das Auslösen eines Kontrollsignals zur Folge hat. Das Kontrollsignal kann optisch sein, ist aber bevorzugt ein akustisches Signal. In den hier gezeigten Fällen ist der Signalstromkreis 24 Teil eines Hupenstromkreises zur Versorgung einer Hupe 32, so daß als akustisches Signal ein Hupsignal ertönt.

Die Versorgung des Signalstromkreises 24 und des Hupenstromkreises erfolgt über die Fahrzeugbatterie 34.

Das Gassackmodul 10 ist als sogenanntes Floating-Hom-Modul ausgelegt, das in Einschubrichtung R so beweglich gelagert ist, daß es zur Betätigung der Hupe um einen gewissen Weg verschoben werden kann. Zur Betätigung der Hupe 32 sind am Gassackmodul 10 und am Lenkrad 12 zwei elektrische Kontakte vorgesehen, die bei Berührung den Hupenstromkreis schließen, so daß das Hupsignal ertönt. Diese beiden Kontakte bilden einen weiteren, zweiten Schalter 36. Dieser eigentliche Hupenschalter 36 ist in seinem Grundzustand offen und nur geschlossen, wenn die Hupe betätigt wird.

Das zweite Kontaktelement 28 kann gleichzeitig die Funktion eines Hupenkontakts erfüllen. In Figur 2 ist schematisch der zweite Teil des Schalters 36 durch ein mit dem Lenkrad 12 verbundenes Bauteil 38 angedeutet.

Bei korrekt eingesetztem Gassackmodul 10 berühren sich die Hupen-Kontaktelemente 28, 38 nicht. Erst wenn das Gassackmodul 10 in Einschubrichtung R nach unten gedrückt wird, wird ein elektrischer Kontakt zwischen den Elementen 28, 38 ausgebildet. Wie in Figur 5 zu sehen ist, sind die beiden Schalter 30, 36 parallel zur Hupe 32 geschaltet. D.h., ein Hupsignal ertönt entweder, wenn die Hupe durch Herunterdrücken des Gassackmoduls 10 betätigt wird, also wenn die Kontakte 28, 38 miteinander in Berührung kommen, oder, wenn das Gassackmodul 10 nicht korrekt am Lenkrad 12 verriegelt ist und die Kontaktelemente 26, 28 sich berühren.

Ist die Batterie 34 angeschlossen, muß es in jedem Fall beim Einschieben des Gassackmoduls 10 in das Lenkrad 12 während des Verriegelns zu einem kurzen Hupsignal kommen. Ist am Ende des Einsetzvorgangs das Hupsignal verstummt, ist dies ein Zeichen dafür, daß die Rastverbindung 14, 16 korrekt ausgebildet ist.

In der ersten Ausführungsform ist das erste Kontaktelement 26 mit dem Pluspol der Batterie verbunden, während das zweite Kontaktelement 28 auf Masse liegt. Dies hat den Vorteil, daß die zweiten Rastelemente 16 nicht gegen das Skelett des Lenkrads 12 isoliert werden müssen.

Genausogut kann natürlich das erste Rastelement bzw. das damit verbundene erste Kontaktelement 26 auf Masse liegen und das zweite Kontaktelement 28 ein von Null verschiedenes Potential annehmen.

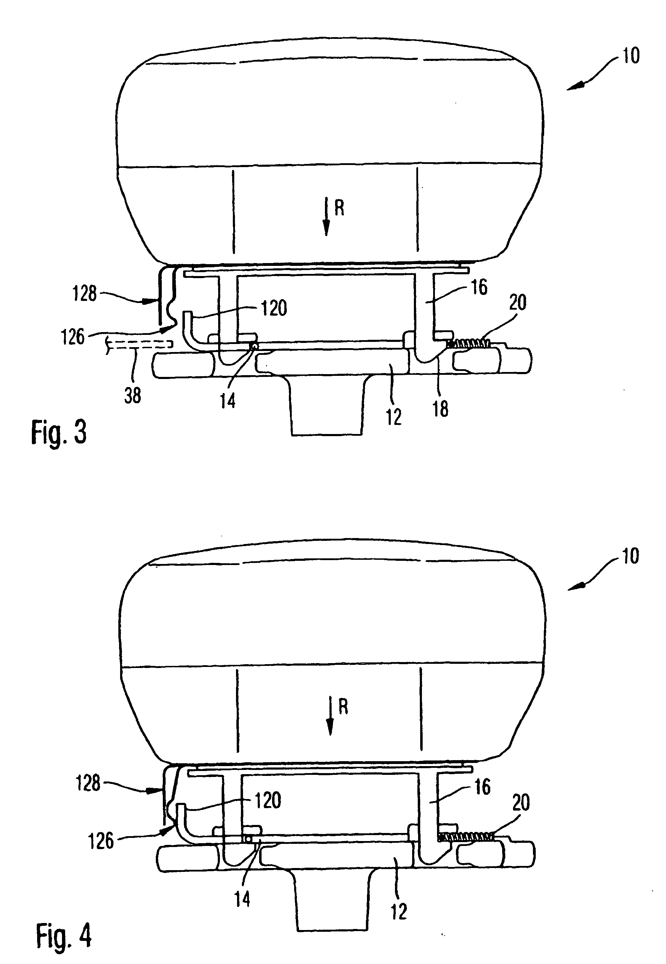

In den Figuren 3, 4 und 6 ist eine zweite Ausführungsform eines Kontrollsystems für die Rastverbindung 14, 16 dargestellt.

In der zweiten Ausführungsform ist im Unterschied zur ersten Ausführungsform das erste Kontaktelement 126 nicht einstückig mit dem ersten Rastelement 14 ausgebildet, sondern als davon separates Bauteil. Im hier gezeigten Fall besteht es aus einem gebogenen Metallblech, das am Gassackmodul 10 befestigt ist. Das zweite Kontaktelement 128 ist, ähnlich wie in der ersten Ausführungsform, ein gebogenes Metallblech, das ebenfalls am Gassackmodul 10 befestigt ist. Der Abstand zwischen den abgebogenen Armen der Kontaktelemente 126, 128 ist so gewählt, daß im nicht ausgelenkten Zustand des ersten Rastelements 14 ein Abschnitt 120 dieses Rastelements 14 am ersten Kontaktelement 126 anliegt und dieses so weit auslenkt, daß es das zweite Kontaktelement 128 berührt und somit einen elektrischen Kontakt zwischen den Kontaktelementen 126, 128 besteht. Diese Situation ist in Figur 4 dargestellt.

In nicht korrekt verriegeltem Zustand, den Figur 3 zeigt, ist das erste Rastelement 14 aus seiner Grundstellung ausgelenkt, und zwar von den Armen der Kontaktelemente 126, 128 weg, so daß der Arm 120 des ersten Rastelements 14 das erste Kontaktelement 126 nicht berührt.

Der Signalstromkreis 124 ist so ausgelegt, daß der durch die Kontaktelemente 126, 128 gebildete Schalter 130 in Reihe mit dem Hupenschalter 36 geschaltet ist. Der Hupenschalter 36 kann wie in der ersten Ausführungsform beschrieben ausgebildet oder aber auf andere bekannte Weise gestaltet sein.

Der Schalter 130 ist nur geschlossen, wenn der Arm 120 die Kontaktelemente 126, 128 aneinanderdrückt, was nur der Fall ist, wenn die Rastverbindung 14, 16 korrekt verriegelt ist. In diesem Fall ertönt also bei einer nicht korrekt verriegelten Rastverbindung 14, 16 kein Hupsignal, sondern die fehlerhafte Rastverbindung wird dadurch festgestellt, daß bei Betätigung der Hupe diese aufgrund des geöffneten Schalters 130 kein Hupsignal ertönen läßt. Bei korrekt eingebautem Gassackmodul 10 ertönt dagegen bei Betätigung der Hupe das Hupsignal.

Auch in der zweiten Ausführungsform ist bevorzugt das erste Kontaktelement 126 mit Masse verbunden, während das zweite Kontaktelement 128 mit dem Pluspol der Batterie 34 verbunden ist. Dies bedingt natürlich, daß die Kontaktelemente 126,128 elektrisch gegeneinander isoliert sind.

Es ist ebenso möglich, die Polaritäten umzukehren und das zweite Kontaktelement 128 auf Masse zu legen.

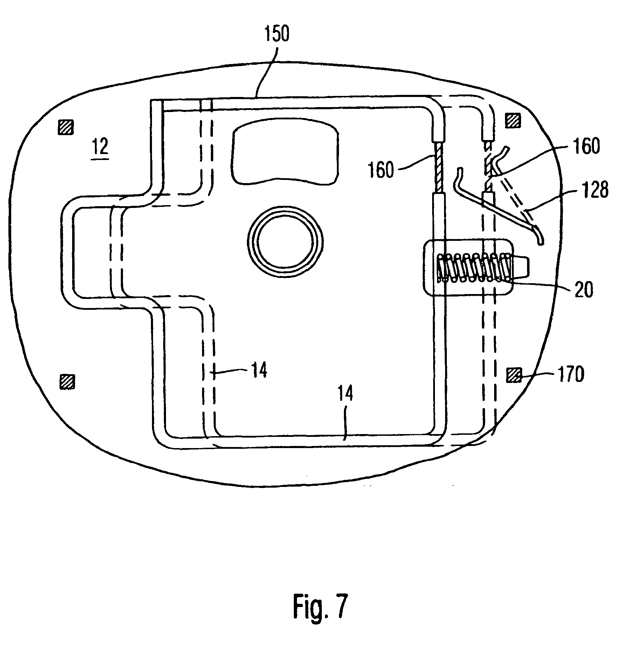

In Figur 7 ist ein Ausschnitt eines Kontrollsystems gezeigt, bei dem das erste Rastelement 14 mit dem Pluspol der Batterie 34 verbunden ist. In diesem Fall ist ein Großteil des ersten Rastelements 14 mit einer elektrischen Isolierung 150 umgeben, nur an einem kleinen Abschnitt 160 liegt das Metall des ersten Rastelements 14 frei. In diesem Bereich ist das zweite Kontaktelement 128 so angeordnet, daß es im ausgelenkten Zustand des ersten Rastelements 14, d.h. bei nicht korrekt verriegelter Rastverbindung 14, 16 (gestrichelt gezeigt) in Kontakt mit dem Abschnitt 160 kommt, so daß ein elektrischer Kontakt zwischen dem Kontaktelement 128 und dem ersten Rastelement 14 gebildet ist. In der korrekt verriegelten Position befindet sich das erste Rastelement 14 wieder in seiner nicht ausgelenkten Stellung (in durchgezogenen Linien gezeigt), in der der Abschnitt 160 vom zweiten Kontaktelement 128 beabstandet ist.

Diese Form des Schalters kann in beiden vorgeschlagenen Ausführungsformen eingesetzt werden.

Figur 7 zeigt außerdem am fahrzeugfesten Teil 13 angeordnete Kontaktnieten 170, die bei Betätigung der Hupe durch Herabdrücken des eingesetzten Gassackmoduls 10 einen Massekontakt zwischen dem Modulboden bzw. einem auf Masse liegenden Kontaktelement sowie über das Lenkrad 12 mit dem Fahrzeug bewirken.

Die Merkmale der ersten und der zweiten Ausführungsform können auch im Ermessen eines Fachmanns miteinander kombiniert oder gegeneinander ausgetauscht werden.

Die gezeigten Ausbildungen des Signalstromkreises sowie der Art und Anordnung der Kontaktelemente sind lediglich als Beispiele zur Verdeutlichung der Erfindungsidee gedacht, einen elektrischen Stromkreis dazu zu verwenden, eine nicht korrekt geschlossene Rastverbindung zu identifizieren. Die nicht korrekt verriegelte Rastverbindung kann dabei sowohl durch das Auslösen eines Signals als auch durch die Unmöglichkeit, ein Signal auszulösen, angezeigt werden. Das fahrzeugfeste Bauteil ist nicht zwingend ein Lenkrad, sondern kann auch andere Bauteile im Fahrzeug, die ein Gassackmodul aufnehmen können, bezeichnen.

## Patentansprüche

1. Kontrollsystem zur Erkennung einer nicht korrekt verriegelten Rastverbindung zwischen einem Gassackmodul (10) und einem fahrzeugfesten Bauteil,
mit einem ersten und einem zweiten, zum ersten komplementären Rastelement (14, 16),
wobei ein Signalstromkreis (24) vorgesehen ist, mit einem ersten und einem zweiten Kontaktelement (26, 28), die Teil eines im Signalstromkreis (24) angeordneten Schalters (30) sind, wobei ein Kontrollsignal zur Erkennung einer nicht korrekt verriegelten Rastverbindung zwischen dem Gassackmodul und dem fahrzeugfesten Bauteil erzeugt wird, wenn der Schalter (30) geschlossen ist und
wobei nur in einem nicht korrekt verriegelten Zustand des ersten und des zweiten Rastelements (14, 16) die Kontaktelemente (26, 28) in elektrischem Kontakt miteinander sind, so daß der Schalter (30) geschlossen ist.

2. Kontrollsystem nach Anspruch 1, **dadurch gekennzeichnet, daß** das Kontrollsignal ein akustisches Signal ist.

3. Kontrollsystem nach einem der vorhergehenden Ansprüche, **dadurch gekennzeichnet, daß** der Signalstromkreis (24) Teil eines Hupenstromkreises ist.

4. Kontrollsystem nach einem der vorhergehenden Ansprüche, **dadurch gekennzeichnet, daß** der Signalstromkreis (24) von einer Batterie (34) des Fahrzeugs gespeist wird.

5. Kontrollsystem nach einem der vorhergehenden Ansprüche, **dadurch gekennzeichnet, daß** das erste Rastelement (14) ein am fahrzeugfesten Bauteil oder dem Gassackmodul (10) befestigtes Metallteil ist, das teilweise von einer elektrischen Isolierung (150) umgeben ist.

6. Kontrollsystem nach einem der vorhergehenden Ansprüche, **dadurch gekennzeichnet, daß** das zweite Rastelement (16) durch wenigstens einen am Gassackmodul (10) oder am fahrzeugfesten Bauteil befestigten Rasthaken gebildet ist.

7. Kontrollsystem nach einem der vorhergehenden Ansprüche, **dadurch gekennzeichnet, daß** das erste Kontaktelement (26) durch das erste Rastelement (14) gebildet ist.

8. Kontrollsystem nach einem der Ansprüche 1 bis 6, **dadurch gekennzeichnet, daß** das erste Kontaktelement durch ein am Gassackmodul (10) oder am fahrzeugfesten Bauteil (13) befestigtes Metallblech gebildet ist.

9. Kontrollsystem nach einem der vorhergehenden Ansprüche, **dadurch gekennzeichnet, daß** das zweite Kontaktelement (28) ein am Gassackmodul (10) oder am fahrzeugfesten Bauteil befestigtes Metallblech ist.

10. Kontrollsystem zur Erkennung einer nicht korrekt verriegelten Rastverbindung zwischen einem Gassackmodul (10) und einem fahrzeugfesten Bauteil,
mit einem ersten und einem zweiten, zum ersten komplementären Rastelement (14,16),
wobei ein Signalstromkreis (124), der geschlossen ein Kontrollsignal zur Erkennung einer korrekt verriegelten Rastverbindung zwischen dem Gassackmodul (10) und dem fahrzeugfesten Bauteil erzeugt, vorgesehen ist, mit einem ersten und einem zweiten Kontaktelement (126, 128), die Teil eines ersten, im Signalstromkreis (124) angeordneten Schalters (130) sind,
wobei der Signalstromkreis (124) einen zweiten, in einem Grundzustand offenen Schalter (36) umfaßt, der mit dem ersten Schalter (130) in Serie geschaltet ist,
wobei nur in einem korrekt verriegelten Zustand der Rastelemente (14, 16) die Kontaktelemente (126, 128) in elektrischem Kontakt miteinander sind, so daß der erste Schalter (130) geschlossen ist und der Signalstromkreis (124) durch Schließen des zweiten Schalters (36) geschlossen werden kann.

11. Kontrollsystem nach Anspruch 1.0, **dadurch gekennzeichnet, daß** der Signalstromkreis (124) Teil eines Hupenstromkreises und der zweite Schalter (36) durch die Hupkontakte (128, 38) gebildet ist.

12. Kontrollsystem nach einem der Ansprüche 10 und 11, **dadurch gekennzeichnet, daß**das erste Kontaktelement (126) durch ein am Gassackmodul (10) oder am fahrzeugfesten Bauteil befestigtes Metallblech gebildet ist.

13. Kontrollsystem nach einem der Ansprüche 10 bis 12, **dadurch gekennzeichnet, daß** das erste Kontaktelement (126) durch das erste Rastelement (14) gebildet ist.

14. Kontrollsystem nach einem der Ansprüche 10 bis 13, **dadurch gekennzeichnet, daß** das erste Rastelement (14) ein am fahrzeugfesten Bauteil oder dem Gassackmodul (10) befestigtes Metallteil ist.

15. Kontrollsystem nach einem der Ansprüche 10 bis 14, **dadurch gekennzeichnet, daß** das zweite Kontaktelement (128) ein am Gassackmodul (10) oder am fahrzeugfesten Bauteil befestigtes Metallblech ist.

16. Kontrollsystem nach einem der Ansprüche 10 bis 15, **dadurch gekennzeichnet, daß** der Signalstromkreis (124) von einer Batterie (34) des Fahrzeugs gespeist wird.

## Claims

1. A monitoring system for detecting an incorrectly locked detent connection between a gas bag module (10) and a vehicle-fixed component,
comprising first and second detent elements (14, 16), the second detent element being complementary to the first,
a signal circuit (24) being provided which has first and second contact elements (26, 28) that are part of a switch (30) arranged in the signal circuit (24), a monitoring signal for detecting an incorrectly locked detent connection between the gas bag module and the vehicle-fixed component being generated when the switch (30) is closed, and
the contact elements (26, 28) being in electrical contact with each other only in an incorrectly locked state of the first and second detent elements (14, 16), so that the switch (30) is closed.

2. The monitoring system according to Claim 1, **characterized in that** the monitoring signal is an acoustic signal.

3. The monitoring system according to either of the preceding claims, **characterized in that** the signal circuit (24) is part of a horn circuit.

4. The monitoring system according to any of the preceding claims, **characterized in that** the signal circuit (24) is supplied by a battery (34) of the vehicle.

5. The monitoring system according to any of the preceding claims, **characterized in that** the first detent element (14) is a metal part which is fastened to the vehicle-fixed component or to the gas bag module (10) and is partly surrounded by an electrical insulation (150).

6. The monitoring system according to any of the preceding claims, **characterized in that** the second detent element (16) is formed by at least one detent hook fastened to the gas bag module (10) or to the vehicle-fixed component.

7. The monitoring system according to any of the preceding claims, **characterized in that** the first contact element (26) is formed by the first detent element (14).

8. The monitoring system according to any of Claims 1 to 6, **characterized in that** the first contact element is formed by a metal sheet fastened to the gas bag module (10) or to the vehicle-fixed component (13).

9. The monitoring system according to any of the preceding claims, **characterized in that** the second contact element (28) is a metal sheet fastened to the gas bag module (10) or to the vehicle-fixed component.

10. A monitoring system for detecting an incorrectly locked detent connection between a gas bag module (10) and a vehicle-fixed component,
comprising first and second detent elements (14, 16), the second detent element being complementary to the first,
a signal circuit (124) being provided, which in the closed state generates a monitoring signal for detecting a correctly locked detent connection between the gas bag module (10) and the vehicle-fixed component, comprising first and second contact elements (126, 128) which are part of a first switch (130) arranged in the signal circuit (124),
the signal circuit (124) comprising a second switch (36) which is open in a basic state and is connected in series with the first switch (130),
the contact elements (126, 128) being in electrical contact with each other only in a correctly locked state of the detent elements (14, 16), so that the first switch (130) is closed and the signal circuit (124) can be closed by closing the second switch (36).

11. The monitoring system according to Claim 10, **characterized in that** the signal circuit (124) is part of a horn circuit and the second switch (36) is formed by the horn contacts (128, 38).

12. The monitoring system according to either of Claims 10 and 11, **characterized in that** the first contact element (126) is formed by a metal sheet fastened to the gas bag module (10) or to the vehicle-fixed component.

13. The monitoring system according to any of Claims 10 to 12, **characterized in that** the first contact element (126) is formed by the first detent element (14).

14. The monitoring system according to any of Claims 10 to 13, **characterized in that** the first detent element (14) is a metal part fastened to the vehicle-fixed component or to the gas bag module (10).

15. The monitoring system according to any of Claims 10 to 14, **characterized in that** the second contact element (128) is a metal sheet fastened to the gas bag module (10) or to the vehicle-fixed component.

16. The monitoring system according to any of Claims 10 to 15, **characterized in that** the signal circuit (124) is supplied by a battery (34) of the vehicle.

## Revendications

1. Système de contrôle pour reconnaître une liaison par enclenchement incorrectement verrouillée entre un module de coussin à gaz (10) et un composant solidaire du véhicule,
comportant des premier et deuxième éléments d'enclenchement (14, 16), le deuxième étant complémentaire du premier,
dans lequel est prévu un circuit de signal avec des premier et deuxième éléments de contact (26, 28) qui font partie d'un commutateur (30) agencé dans le circuit de signal, un signal de contrôle est produit pour reconnaître une liaison incorrectement verrouillée entre le module de coussin à gaz et le composant solidaire du véhicule, lorsque le commutateur (30) est fermé et
dans lequel les éléments de contact (26, 28) ne sont en contact électrique l'un avec l'autre que dans un état incorrectement verrouillé des premier et deuxième éléments d'enclenchement (14, 16), de sorte que le commutateur (30) est fermé.

2. Système de contrôle selon la revendication 1, **caractérisé en ce que** le signal de contrôle est un signal acoustique.

3. Système de contrôle selon l'une des revendications précédentes, **caractérisé en ce que** le circuit de signal (24) fait partie d'un circuit de klaxon.

4. Système de contrôle selon l'une des revendications précédentes, **caractérisé en ce que** le circuit de signal (24) est alimenté par une batterie (34) du véhicule.

5. Système de contrôle selon l'une des revendications précédentes, **caractérisé en ce que** le premier élément d'enclenchement (14) est une pièce métallique fixée sur le composant solidaire du véhicule ou sur le module de coussin à gaz (10), laquelle est entourée partiellement par une isolation électrique (150).

6. Système de contrôle selon l'une des revendications précédentes, **caractérisé en ce que** le deuxième élément d'enclenchement (16) est formé par au moins un crochet d'enclenchement fixé sur le module de coussin à gaz (10) ou sur le composant solidaire du véhicule.

7. Système de contrôle selon l'une des revendications précédentes, **caractérisé en ce que** le premier élément de contact (26) est formé par le premier élément d'enclenchement (14).

8. Système de contrôle selon l'une des revendications 1 à 6, **caractérisé en ce que**, **caractérisé en ce que** le premier élément de contact est formé par une tôle métallique fixée sur le module de coussin à gaz (10) ou sur le composant solidaire du véhicule.

9. Système de contrôle selon l'une des revendications précédentes, **caractérisé en ce que** le deuxième élément de contact (28) est une tôle métallique fixée sur le module de coussin à gaz (10) ou sur le composant solidaire du véhicule.

10. Système de contrôle pour reconnaître une liaison d'enclenchement incorrectement verrouillée entre un module de coussin à gaz (10) et un composant solidaire du véhicule,
comportant des premier et deuxième éléments d'enclenchement (14, 16), le deuxième étant complémentaire du premier,
dans lequel est prévu un circuit de signal qui, lorsqu'il est fermé, produit un signal de contrôle pour reconnaître une liaison correctement verrouillée entre le module de coussin à gaz et le composant solidaire du véhicule, comportant des premier et deuxième éléments de contact (126, 128) qui font partie d'un premier commutateur (130) agencé dans le circuit de signal (124),
dans lequel le circuit de signal (124) comprend un deuxième commutateur (36) ouvert dans un état de base, lequel est monté en série avec le premier commutateur (130),
dans lequel les éléments de contact (126, 128) ne sont en contact électrique l'un avec l'autre que dans un état correctement verrouillé des éléments d'enclenchement (14, 16), de telle sorte que le premier commutateur (130) est fermé et que le circuit de signal (124) peut être fermé en fermant le deuxième commutateur (36).

11. Système de contrôle selon la revendication 10, **caractérisé en ce que** le circuit de signal (124) fait partie d'un circuit de klaxon et le deuxième commutateur (36) est formé par les contacts de klaxon (128, 38).

12. Système de contrôle selon l'une des revendications 10 et 11, **caractérisé en ce que** le premier élément de contact (126) est formé par une tôle métallique fixée sur le module de coussin à gaz (10) ou sur le composant solidaire du véhicule.

13. Système de contrôle selon l'une des revendications 10 à 12, **caractérisé en ce que** le premier élément de contact (126) est formé par le premier élément d'enclenchement (14).

14. Système de contrôle selon l'une des revendications 10 à 13, **caractérisé en ce que** le premier élément d'enclenchement (14) est une pièce métallique fixée sur le composant solidaire du véhicule ou sur le coussin à gaz (10).

15. Système de contrôle selon l'une des revendications 10 à 14, **caractérisé en ce que** le deuxième élément de contact (128) est une tôle métallique fixée sur le module de coussin à gaz (10) ou sur le composant solidaire du véhicule.

16. Système de contrôle selon l'une des revendications 10 à 15, **caractérisé en ce que** le circuit de signal (124) est alimenté par une batterie (34) du véhicule.
